# EUROPEAN PATENT APPLICATION

(11) **EP 4 715 557 A1**
(43) Date of publication of application: **25.03.2026**
(21) Application number: 24829804.4
(22) Date of filing: 02.02.2024
(51) Int. Cl.: G06F 3/06

(54) **HARD DISK MANAGEMENT METHOD AND APPARATUS, AND SYSTEM**

(30) Priority: 28.06.2023 CN 202310778132; 28.09.2023 CN 202311294459
(71) Applicant: HUAWEI TECHNOLOGIES CO., LTD., Shenzhen, Guangdong 518129 (CN)
(72) Inventor: ZHANG, Jian, Shenzhen, Guangdong 518129 (CN); LIAN, Tao, Shenzhen, Guangdong 518129 (CN); ZHANG, Nandong, Shenzhen, Guangdong 518129 (CN); LI, Daquan, Shenzhen, Guangdong 518129 (CN); SHEN, Hui, Shenzhen, Guangdong 518129 (CN)
(74) Representative: Gill Jennings & Every LLP
(86) International application number: PCT/CN2024/075513
(87) International publication number: WO 2025/001142

(57) **Abstract**

This application discloses a management method and apparatus for a drive, and a system. At least one storage node in the system may precisely identify a faulty local area in the drive, and determine physical space corresponding to the local area, to precisely isolate the physical space. This helps, on a premise that reliability of data on the drive is ensured, prolong usage duration of the drive and reduce a frequency of performing entire drive isolation on the drive by the storage system, thereby helping reduce costs of the storage system. In addition, because a detection result of a physical attribute of the local area generally does not depend on extensive I/O access to the corresponding physical space, the storage node may identify the faulty local area based on the detection result of the physical attribute, to determine unavailable physical space. This helps identify and isolate the physical space before a computing node extensively accesses the unavailable physical space, to improve data reliability and reduce a delay caused by a failure to access the physical space.

## Description

This application claims priorities to Chinese Patent Application No. 202310778132.6, filed with the China National Intellectual Property Administration on June 28, 2023 and entitled "STORAGE ARRAY", and to Chinese Patent Application No. 202311294459.2, filed with the China National Intellectual Property Administration on September 28, 2023 and entitled "MANAGEMENT METHOD AND APPARATUS FOR DRIVE, AND SYSTEM", both of which are incorporated herein by reference in their entireties.

### TECHNICAL FIELD

This application relates to the field of storage technologies, and in particular, to a management method and apparatus for a drive, and a system.

### BACKGROUND

As a service volume in a data center continuously increases, an amount of to-be-stored data also increases. Correspondingly, a quantity of drives in a storage node continuously increases. A health status of the drive directly affects security of data on the drive. To improve security of the data in the storage node, the storage node generally identifies a faulty drive based on multi-dimensional data on the entire drive. For example, when an input/output (input/output, I/O) error count of the drive reaches a threshold, the storage node performs entire drive isolation on the drive. For example, the storage node may provide a prompt to replace the drive, perform redundancy recovery on the data stored on the entire drive, and so on.

As a capacity of the drive continuously increases, a price of the drive also rises, and costs of replacing the drive continuously increase. In addition, performing redundancy recovery on the data on the entire drive by the storage node occupies longer duration and consumes more storage resources and computing resources.

### SUMMARY

This application provides a management method and apparatus for a drive, and a system, to reduce a frequency of replacing the drive for a storage node, reduce costs of the storage node, and save storage resources and computing resources of the storage node.

This application provides a management method for a drive. The drive may provide physical space for data storage for a storage node. The drive may include a storage controller and a storage component. The storage component can write data into the physical space for data storage or read data from the physical space under control of the storage controller. The storage controller is configured to connect to a control unit of the storage node, may receive a data access request from the control unit, and access, based on the data access request, physical space provided by the storage component. The physical space provided by the storage component may be the physical space into which the storage component can write the data and/or from which the storage component can read the data under control of the storage controller.

According to a first aspect, the method may be performed by the drive or a module in the drive. For example, the storage controller performs the method. The method may include: The storage controller identifies a health status of a local area in the storage component, where the local area is for providing a part of physical space in all physical space provided by the storage component; and when the health status of the local area indicates that the local area is faulty, the storage controller determines that the part of physical space is unavailable.

After the storage controller determines the part of physical space that is unavailable, the storage controller can more accurately determine available physical space in the drive, to help the drive continue to provide a reliable storage service for the storage node, prolong usage duration of the drive, and reduce a frequency of performing entire drive isolation on the drive by the storage node, thereby reducing costs of the storage node and saving storage resources and computing resources of the storage node.

Optionally, that the storage controller identifies the health status of the local area includes: The storage controller obtains running information of the local area, where the running information includes values of one or more physical attributes of the local area; and the storage controller identifies the health status of the local area based on the running information.

Optionally, the one or more physical attributes include at least one of the following physical attributes: a temperature, a size, a motion parameter, and an electrical parameter. For example, the drive is a hard disk drive HDD, the storage component includes a plurality of heads, the local area is a part of the plurality of heads (for example, one head), the motion parameter includes a head flying height, and the electrical parameter includes a head resistance and/or a signal-to-noise ratio of a head signal. The drive is a hard disk drive HDD, the storage component includes a plurality of heads, the local area is a part of the plurality of heads, the motion parameter includes a head flying height, and the electrical parameter includes a head resistance and/or a signal-to-noise ratio of a head signal.

A detection result of the physical attribute of the local area generally does not depend on extensive I/O access to corresponding physical space, and the health status of the local area is identified based on the detection result of the physical attribute of the local area. This helps isolate the physical space before the control unit extensively accesses the corresponding physical space, to improve data reliability and reduce a delay caused by a failure to access the physical space.

Optionally, the method further includes: The storage controller transmits notification information to the control unit, where the notification information indicates to isolate the part of physical space. This helps avoid the control unit continuing to access the part of physical space, to improve data reliability and reduce a data access delay.

Optionally, the notification information includes an address of the part of physical space, and the notification information indicates that the address of the part of physical space is unavailable. This helps the control unit no longer allocate the address subsequently, to avoid continuing to access the part of physical space.

Optionally, the notification information includes a first address of first physical space into which data is written and that is in the part of physical space, and the notification information indicates the control unit to perform redundancy repair on the data in the first address. This helps the control unit perform redundancy repair on the written data in the part of physical space, to improve reliability of data stored in the storage node.

Optionally, the notification information includes capacity information, the capacity information is for determining a capacity of the part of physical space, and the notification information indicates that the drive loses the capacity. This helps the control unit determine a current available capacity of the drive, to determine an isolation policy. For example, when the capacity exceeds a threshold, all the physical space in the drive is isolated, or a storage pool is updated based on the capacity. For example, capacity reduction is performed on the storage pool, or a capacity of spare physical space is used to compensate for the lost capacity.

Optionally, the method further includes: The storage controller receives a data access request from the control unit; and the storage controller transmits response information to the control unit when an address carried in the data access request points to the part of physical space, where the response information indicates that the address carried in the data access request is unavailable. This helps avoid low data reliability caused by successfully writing the data into a damaged area based on the request by the drive, and also helps reduce a long access delay caused by returning an error to the control unit by the drive after the drive fails to access the damaged area.

According to a second aspect, the method may be performed by the control unit or a module in the control unit. For example, the control unit performs the method. The method may include: The control unit obtains notification information from the drive, where the notification information is transmitted by the drive to the control unit when a local area in the storage component is faulty, the local area is for providing a part of physical space in all physical space provided by the storage component, and the notification information indicates to isolate the part of physical space; and the control unit isolates the part of physical space. When the local area in the drive is faulty, the part of physical space in the drive is caused to be unavailable. The control unit isolates the part of physical space based on the notification information. This helps the control unit continue to access available physical space in the drive, and helps, on a premise that reliability of the drive is ensured, prolong usage duration of the drive and reduce a frequency of performing entire drive isolation on the drive, thereby reducing costs of the storage node and saving storage resources and computing resources of the storage node.

Optionally, the notification information includes an address of the part of physical space, and isolating the part of physical space includes: The control unit updates an available address in the drive, where the available address is an address of allocatable physical space in the drive, and an updated available address does not include the address of the part of physical space. This helps the control unit no longer allocate the address subsequently, to avoid continuing to access the part of physical space.

Optionally, the notification information includes a first address of physical space into which data is written and that is in the part of physical space, and isolating the part of physical space includes: The control unit performs redundancy repair on the data in the first address. This helps the control unit perform redundancy repair on the written data in the part of physical space, to improve reliability of data stored in the storage node.

According to a third aspect, the method may be performed by the control unit or a module in the control unit. For example, the control unit performs the method. The method may include: The control unit obtains running information of a local area in the storage component, where the running information includes values of one or more physical attributes of the local area, and the local area is for providing a part of physical space in all physical space provided by the storage component; the control unit identifies a health status of the local area based on the running information; and when the health status of the local area indicates that the local area is faulty, the control unit determines that the part of physical space is unavailable.

After the control unit determines the part of physical space that is unavailable in the drive, the control unit can more accurately determine available physical space in the drive, to help the drive continue to provide a reliable storage service for the storage node, prolong usage duration of the drive, and reduce a frequency of performing entire drive isolation on the drive, thereby reducing costs of the storage node and saving storage resources and computing resources of the storage node.

Optionally, the one or more physical attributes include at least one of the following physical attributes: a temperature, a size, a motion parameter, and an electrical parameter. For example, the drive is a hard disk drive HDD, the storage component includes a plurality of heads, the local area is a part of the plurality of heads (for example, one head), the motion parameter includes a head flying height, and the electrical parameter includes a head resistance and/or a signal-to-noise ratio of a head signal. The drive is a hard disk drive HDD, the storage component includes a plurality of heads, the local area is a part of the plurality of heads, the motion parameter includes a head flying height, and the electrical parameter includes a head resistance and/or a signal-to-noise ratio of a head signal.

A detection result of the physical attribute of the local area generally does not depend on extensive I/O access to corresponding physical space, and the health status of the local area is identified based on the detection result of the physical attribute of the local area. This helps isolate the physical space before the control unit extensively accesses the corresponding physical space, to improve data reliability and reduce a delay caused by a failure to access the physical space.

Optionally, the method further includes: The control unit isolates the part of physical space.

Optionally, isolating the part of physical space includes: The control unit determines an address of the part of physical space; and the control unit updates an available address in the drive, where the available address is an address of allocatable physical space in the drive, and an updated available address does not include the address of the part of physical space. This helps the control unit no longer allocate the address subsequently, to avoid continuing to access the part of physical space.

Optionally, that the control unit isolates the part of physical space includes: The control unit determines a first address of physical space into which data is written and that is in the part of physical space; and the control unit performs redundancy repair on the data in the first address. This helps the control unit perform redundancy repair on the written data in the part of physical space.

Optionally, the method further includes: The control unit determines a capacity of the part of physical space; and the control unit isolates all the physical space in the drive when the capacity exceeds a threshold. This helps the control unit determine a current available capacity of the drive, to determine an isolation policy. For example, when the capacity exceeds the threshold, all the physical space in the drive is isolated, or a storage pool is updated based on the capacity. For example, capacity reduction is performed on the storage pool, or a capacity of spare physical space is used to compensate for the lost capacity.

According to a fourth aspect, the method may be performed by the drive or a module in the drive. For example, the method is performed by the storage controller. The method may include: The storage controller obtains running information of a local area, where the running information includes values of one or more physical attributes of the local area in the drive, the running information identifies a health status of the local area, and the local area is for providing a part of physical space in all physical space provided by the storage component; and the storage controller transmits the running information to the control unit. In this way, when the local area is faulty, the control unit can determine, based on the running information, that the part of physical space is unavailable, and a case in which the control unit continues to access the part of physical space is avoided, thereby improving data reliability and reducing a delay. In addition, this helps the drive more accurately determine available physical space, to help the drive continue to provide a reliable storage service for the storage node and reduce a waste of the available physical space in the drive, thereby reducing costs of the storage node.

Optionally, the one or more physical attributes include at least one of the following physical attributes: a temperature, a size, a motion parameter, and an electrical parameter. For example, the drive is a hard disk drive HDD, the storage component includes a plurality of heads, the local area is a part of the plurality of heads (for example, one head), the motion parameter includes a head flying height, and the electrical parameter includes a head resistance and/or a signal-to-noise ratio of a head signal. The drive is a hard disk drive HDD, the storage component includes a plurality of heads, the local area is a part of the plurality of heads, the motion parameter includes a head flying height, and the electrical parameter includes a head resistance and/or a signal-to-noise ratio of a head signal.

A detection result of the physical attribute of the local area generally does not depend on extensive I/O access to corresponding physical space, and the health status of the local area is identified based on the detection result of the physical attribute of the local area. This helps isolate the physical space before the control unit extensively accesses the corresponding physical space, to improve data reliability and reduce a delay caused by a failure to access the physical space.

According to a fifth aspect, this application provides a drive. The drive includes a storage controller and a storage component, the storage controller is configured to connect to a control unit of a storage node, the storage component is configured to provide physical space for data storage for the control unit under control of the storage controller, the storage controller is configured to receive a data access request from the control unit, and access, based on the data access request, the physical space provided by the storage component, and the storage controller is configured to perform the method according to the first aspect or the fourth aspect.

According to a sixth aspect, this application provides a storage node. The storage node includes a control unit and a communication unit, the control unit is connected to the communication unit, the communication module is configured to connect to a drive through communication, the control unit is configured to connect to the drive via the communication unit, and the control unit is configured to perform the method according to the second aspect or the third aspect. In this application, a quantity of drives connected to the communication unit is not limited, and the communication unit being directly connected to the drive is not limited either. For example, the communication unit may be configured to connect to a drive enclosure, or the communication unit is connected to a drive in the drive enclosure via a controller of the drive enclosure.

Optionally, the storage node further includes one or more drives, the one or more drives are connected to the communication unit, and the one or more drives include at least one drive according to the fifth aspect.

According to a seventh aspect, this application provides a computer-readable storage medium. The computer-readable storage medium includes computer-executable instructions. When the computer-executable instructions are run on a computer, the computer is caused to perform the method according to any one of the first aspect to the fourth aspect.

According to an eighth aspect, this application provides a system. The system includes a plurality of storage nodes according to the sixth aspect connected to each other.

Optionally, the system further includes one or more computing nodes, and the computing node is configured to send a data access request to the storage node.

This application further provides a management apparatus for a drive. The drive may provide physical space for data storage for a storage node. The drive may include a storage controller and a storage component. The storage component can write data into the physical space for data storage or read data from the physical space under control of the storage controller. The storage controller is configured to connect to a control unit of the storage node, may receive a data access request from the control unit, and access, based on the data access request, physical space provided by the storage component. The physical space provided by the storage component may be the physical space into which the storage component can write the data and/or from which the storage component can read the data under control of the storage controller.

According to a ninth aspect, the management apparatus is the drive, or is disposed in the drive and is a module in the drive. The management apparatus may include an identification module and a determining module. The identification module is configured to identify a health status of a local area in the drive, where the local area is for providing a part of physical space in all physical space provided by the storage component. The determining module is configured to: when the health status of the local area indicates that the local area is faulty, determine that the part of physical space is unavailable.

Optionally, the identification module is configured to: obtain running information of the local area, where the running information includes values of one or more physical attributes of the local area; and identify the health status of the local area based on the running information.

Optionally, the one or more physical attributes include at least one of the following physical attributes: a temperature, a size, a motion parameter, and an electrical parameter. For example, the drive is a hard disk drive HDD, the storage component includes a plurality of heads, the local area is a part of the plurality of heads (for example, one head), the motion parameter includes a head flying height, and the electrical parameter includes a head resistance and/or a signal-to-noise ratio of a head signal. The drive is a hard disk drive HDD, the storage component includes a plurality of heads, the local area is a part of the plurality of heads, the motion parameter includes a head flying height, and the electrical parameter includes a head resistance and/or a signal-to-noise ratio of a head signal.

Optionally, the management apparatus may further include a communication module. The communication module is configured to transmit notification information to the control unit, where the notification information indicates to isolate the part of physical space.

Optionally, the notification information includes an address of the part of physical space, and the notification information indicates that the address of the part of physical space is unavailable.

Optionally, the notification information includes a first address of first physical space into which data is written and that is in the part of physical space, and the notification information indicates the control unit to perform redundancy repair on the data in the first address.

Optionally, the notification information includes capacity information, the capacity information is for determining a capacity of the part of physical space, and the notification information indicates that the drive loses the capacity.

Optionally, the communication module is further configured to: receive a data access request from the control unit; and transmit response information to the control unit when an address carried in the data access request points to the part of physical space, where the response information indicates that the address carried in the data access request is unavailable.

According to a tenth aspect, the management apparatus is the control unit, or is disposed in the control unit and is a module in the control unit. The management apparatus includes an obtaining module and an isolation module. The obtaining module is configured to obtain notification information from the drive, where the notification information is transmitted by the drive to the control unit when a local area in the storage component is faulty, the local area is for providing a part of physical space in all physical space provided by the storage component, and the notification information indicates to isolate the part of physical space. The isolation module is configured to isolate the part of physical space.

Optionally, the notification information includes an address of the part of physical space, and the isolation module is configured to update an available address in the drive, where the available address is an address of allocatable physical space in the drive, and an updated available address does not include the address of the part of physical space.

Optionally, the notification information includes a first address of physical space into which data is written and that is in the part of physical space, and the isolation module is configured to perform redundancy repair on the data in the first address.

According to an eleventh aspect, the management apparatus is the control unit, or is disposed in the control unit and is a module in the control unit. The management apparatus includes an obtaining module and a determining module. The obtaining module is configured to obtain running information of a local area, where the running information includes values of one or more physical attributes of the local area in the drive, and the local area is for providing a part of physical space in all physical space provided by the storage component. The determining module is configured to: identify a health status of the local area based on the running information; and when the health status of the local area indicates that the local area is faulty, determine that the part of physical space is unavailable.

Optionally, the one or more physical attributes include at least one of the following physical attributes: a temperature, a size, a motion parameter, and an electrical parameter.

Optionally, the drive is a hard disk drive HDD, the local area is a part of heads in the HDD, motion parameters of the part of heads include flying heights of the part of heads, and electrical parameters of the part of heads include resistances and/or channel parameters of the part of heads.

Optionally, the management apparatus may further include an isolation module, and the isolation module is configured to isolate the part of physical space.

Optionally, the isolation module is configured to: determine an address of the part of physical space; and update an available address in the drive, where the available address is an address of allocatable physical space in the drive, and an updated available address does not include the address of the part of physical space.

Optionally, the isolation module is configured to: determine a first address of physical space into which data is written and that is in the part of physical space; and perform redundancy repair on the data in the first address.

Optionally, the isolation module is further configured to: determine a capacity of the part of physical space; and isolate all the physical space in the drive when the capacity exceeds a threshold.

According to a twelfth aspect, the management apparatus is the drive, or is disposed in the drive and is a module in the drive. The apparatus includes an obtaining module and a communication module. The obtaining module is configured to obtain running information of a local area, where the running information includes values of one or more physical attributes of the local area in the drive, the running information identifies a health status of the local area, and the local area is for providing a part of physical space in all physical space provided by the storage component. The communication module is configured to transmit the running information to the control unit.

Optionally, the one or more physical attributes include at least one of the following physical attributes: a temperature, a size, a motion parameter, and an electrical parameter.

Optionally, the drive is a hard disk drive HDD, the local area is a part of heads in the HDD, motion parameters of the part of heads include flying heights of the part of heads, and electrical parameters of the part of heads include resistances and/or channel parameters of the part of heads.

The apparatuses provided in this application may be configured to perform the foregoing method steps. Therefore, for technical effects that can be obtained by the apparatuses in this application, refer to technical effects achieved by the foregoing corresponding methods. Details are not described herein again.

### BRIEF DESCRIPTION OF DRAWINGS

FIG. 1 shows an example of a centralized storage system using a drive-controller separation architecture;
FIG. 2 shows an example of a distributed storage system using a fully converged architecture;
FIG. 3 shows an example of a possible structure of an HDD;
FIG. 4 and FIG. 5 each schematically show a possible procedure of a method according to this application;
FIG. 6 schematically shows another possible structure of a system according to this application; and
FIG. 7 to FIG. 10 each schematically show a possible structure of a management apparatus according to this application.

### DESCRIPTION OF EMBODIMENTS

The following first describes, with reference to accompanying drawings, an application scenario to which this application is applicable.

This application may be applied to an application scenario of a centralized storage system. The centralized storage system is a central node including one or more main devices. Data is centrally stored on the central node, and all data processing services of the entire system are centrally deployed on the central node. In other words, in the centralized storage system, a terminal or a client is only responsible for data input and output, and data storage and control processing are completely completed by the central node. A most significant feature of the centralized system is that a deployment structure is simple. There is no need to consider how to deploy a plurality of nodes for a service, and therefore there is no need to consider distributed collaboration between the plurality of nodes.

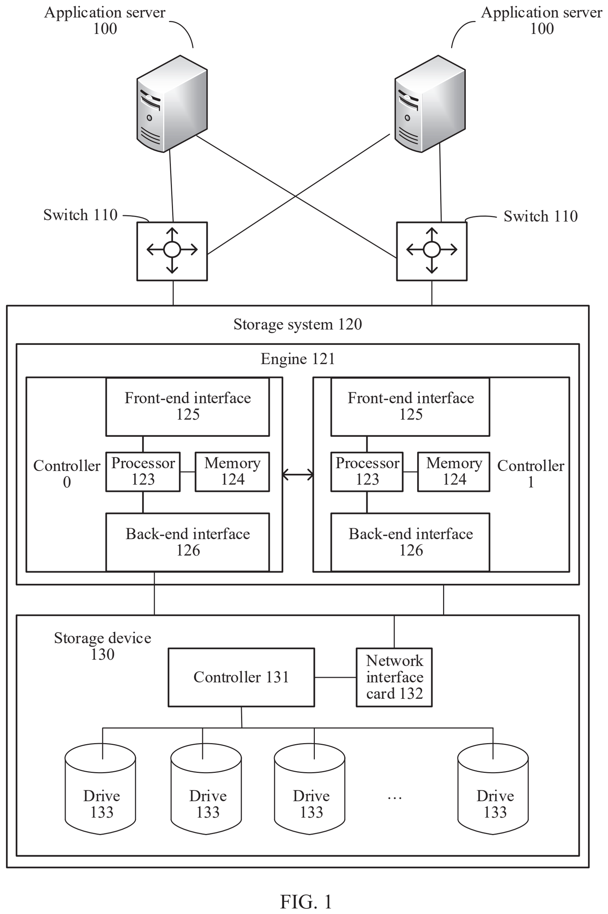

FIG. 1 shows an example of a centralized storage system using a drive-controller separation architecture. In the centralized storage system shown in FIG. 1, a user accesses data by using applications. A computer that runs the applications is referred to as an "application server". The application server 100 may be a physical machine or a virtual machine. A physical application server includes but is not limited to a desktop computer, a server, a notebook computer, and a mobile device. The application server accesses the storage system via a fibre channel switch 110 to access the data. However, the switch 110 is only an optional device. The application server 100 may alternatively directly communicate with the storage system 120 via a network. Alternatively, the fibre channel switch 110 may be replaced with an Ethernet switch, an InfiniBand switch, a RoCE (RDMA over Converged Ethernet) switch, or the like.

The storage system 120 shown in FIG. 1 is a centralized storage system. The centralized storage system features a unified portal, and all data from an external device passes through the portal. The portal is an engine 121 of the centralized storage system. The engine 121 is a core component of the centralized storage system, and many advanced functions of the storage system are implemented in the engine 121.

As shown in FIG. 1, there is one or more controllers in the engine 121. In FIG. 1, an example in which the engine 121 includes two controllers is used for description. There is a mirror channel between a controller 0 and a controller 1. In this case, after writing a piece of data into a memory 124 of the controller 0, the controller 0 may send a copy of the data to the controller 1 through the mirror channel, and the controller 1 stores the copy in a local memory 124 of the controller 1. Therefore, the controller 0 and the controller 1 back up each other. When the controller 0 is faulty, the controller 1 may take over a service of the controller 0, and when the controller 1 is faulty, the controller 0 may take over a service of the controller 1, to avoid the entire storage system 120 being unavailable due to a hardware fault. When four controllers are deployed in the engine 121, there is a mirror channel between any two controllers. Therefore, the any two controllers back up each other.

The engine 121 further includes a front-end interface 125 and a back-end interface 126. The front-end interface 125 is configured to communicate with the application server 100, to provide a storage service for the application server 100. The back-end interface 126 is configured to communicate with a drive 133, to expand a capacity of the storage system. Through the back-end interface 126, the engine 121 may be connected to more drives 133, to form a very large storage resource pool (also referred to as a storage pool).

In terms of hardware, as shown in FIG. 1, the controller 0 may include at least a processor 123 and the memory 124. The processor 123 is a central processing unit (central processing unit, CPU), is configured to process a data access request (for example, a data read/write request) from the outside of the storage system (a server or another storage system), and is also configured to process a request generated inside the storage system. For example, when receiving, through the front-end interface125, data write requests sent by the application server 100, the processor 123 temporarily stores data in the data write requests in the memory 124. When a total amount of data in the memory 124 reaches a specific threshold, the processor 123 sends, through the back-end interface, the data stored in the memory 124 to the drive 133 for persistent storage.

The memory 124 is an internal storage that directly exchanges data with the processor, can read/write data at any time at a high speed, and is used as a temporary data storage of an operating system or another running program. The memory includes at least two types of storages. For example, the memory may be a random access memory or a read-only memory (Read-Only Memory, ROM). For example, the random access memory is a dynamic random access memory (Dynamic Random Access Memory, DRAM) or a storage class memory (Storage Class Memory, SCM). The DRAM is a semiconductor memory, and is a volatile memory (volatile memory) device like most random access memories (Random Access Memories, RAMs). The SCM is a composite storage technology that combines features of both a conventional storage apparatus and a storage. The storage class memory can provide a faster read/write speed than the drive, but has a slower access speed than the DRAM and lower costs than the DRAM. However, the DRAM and the SCM are merely examples for description in embodiments. The memory may further include another random access memory, for example, a static random access memory (Static Random Access Memory, SRAM). For example, the read-only memory may be a programmable read-only memory (Programmable Read-Only Memory, PROM) or an erasable programmable read-only memory (Erasable Programmable Read-Only Memory, EPROM). In addition, the memory 124 may alternatively be a dual line memory module or a dual in-line memory module (Dual In-line Memory Module, DIMM for short), that is, a module formed by a dynamic random access memory (DRAM), and may alternatively be a solid-state drive (Solid-State Drive, SSD). In an actual application, a plurality of memories 124 and different types of memories 124 may be configured in the controller 0. A quantity and types of the memories 124 are not limited in this embodiment. In addition, the memory 124 may be configured to have a power failure protection function. The power failure protection function means that the data stored in the memory 124 is not lost when the system experiences power failure and then gets powered on. A memory having the power failure protection function is referred to as a non-volatile memory.

The memory 124 stores a software program. The processor 123 may run the software program in the memory 124 to manage the drive. For example, the drive is abstracted into a storage pool, and then divided into LUNs for a server to use. The LUN herein is actually a drive observed on the server. Certainly, some centralized storage systems are also file servers, and may provide a file sharing service for the server.

Hardware components and software structures of the controller 1 (and other controllers not shown in FIG. 1) are similar to those of the controller 0. Details are not described herein again.

In the centralized storage system with drive-controller separation shown in FIG. 1, the engine 121 may not have a drive slot, the drive 133 needs to be placed in a storage device 130, and the back-end interface 126 communicates with the storage device 130. The back-end interface 126 exists in the engine 121 in a form of an adapter card. One engine 121 may simultaneously use two or more back-end interfaces 126 to connect to a plurality of drive enclosures. Alternatively, the adapter card may be integrated on a mainboard. In this case, the adapter card may communicate with the processor 123 through a PCIE bus.

It should be noted that, FIG. 1 shows only one engine 121. However, in an actual application, the storage system may include two or more engines 121, and redundancy or load balancing is performed between a plurality of engines 121.

The storage device 130 includes a controller 131 and several drives 133. The controller 131 may have a plurality of forms. In a case, the storage device 130 may be a smart drive enclosure. As shown in FIG. 1, the controller 131 includes a CPU and a memory. The CPU is configured to perform operations such as address translation and data reading/writing. The memory is configured to temporarily store data to be written into the drive 133, or read, from the drive 133, data to be sent to the controller 0 or the controller 1. In another case, the controller 131 is a programmable electronic component, for example, a data processing unit (data processing unit, DPU). The DPU has versatility and programmability of the CPU, but is more specialized, and can run efficiently on a network data packet, a storage request, or an analysis request. The DPU is distinguished from the CPU by a high degree of parallelism (which requires processing a large number of requests). Optionally, the DPU herein may alternatively be replaced with a processing chip, for example, a graphics processing unit (graphics processing unit, GPU) or an embedded neural-network processing unit (neural-network processing unit, NPU). Usually, there may be one controller 131, or there may be two or more controllers 131. When the storage device 130 includes at least two controllers 131, there may be a homing relationship between the drive 133 and the controller 131. If there is a homing relationship between the drive 133 and the controller 131, each controller 131 can only access a drive belonging to the controller 131. This usually involves forwarding a data access request between the controllers 131, resulting in a long data access path. In addition, if storage space is insufficient, when a new drive 133 is added to the storage device 130, the homing relationship between the drive 133 and the controller 131 needs to be rebound. An operation is complex, and consequently, expansion of the storage space is poor. Therefore, in another implementation, a function of the controller 131 may be offloaded to a network interface card 132. In other words, in this implementation, the storage device 130 does not have the controller 131 inside, but the network interface card 132 completes data reading/writing, address translation, and other computing functions. In this case, the network interface card 132 is an intelligent network interface card, and may include a CPU and a memory. In some application scenarios, the network interface card 132 may further have a persistent storage medium, for example, a persistent memory (Persistent Memory, PM), a non-volatile random access memory (Non-Volatile Random Access Memory, NVRAM), or a phase change memory (phase change memory, PCM). The CPU is configured to perform operations such as address translation and data reading/writing. The memory is configured to temporarily store data to be written into the drive 133, or read, from the drive 133, data to be sent to the controller. The network interface card may alternatively be a programmable electronic component, for example, a data processing unit (data processing unit, DPU). The DPU has versatility and programmability of the CPU, but is more specialized, and can run efficiently on a network data packet, a storage request, or an analysis request. The DPU is distinguished from the CPU by a high degree of parallelism (which requires processing a large number of requests). Optionally, the DPU herein may alternatively be replaced with a processing chip, for example, a graphics processing unit (graphics processing unit, GPU) or an embedded neural-network processing unit (neural-network processing unit, NPU). There is no homing relationship between the network interface card 132 and the drive 133 in the storage device 130, and the network interface card 132 may access any drive 133 in the storage device 130. Therefore, it is convenient to expand the drive when the storage space is insufficient.

Based on a type of a communication protocol between the engine 121 and the storage device 130, the storage device 130 may be a SAS drive enclosure, an NVMe drive enclosure, an IP drive enclosure, or another type of drive enclosure. The SAS drive enclosure uses the SAS 3.0 protocol, and each enclosure supports 25 SAS drives. The engine 121 is connected to the storage device 130 through an onboard SAS interface or by using a SAS interface module. The NVMe drive enclosure is more like a complete computer system, and an NVMe drive is inserted into the NVMe drive enclosure. The NVMe drive enclosure is then connected to the engine 121 through an RDMA port.

Certainly, the centralized storage system using the drive-controller separation architecture shown in FIG. 1 is merely used as an example for description. In an actual application, the centralized storage system may alternatively use a drive-controller integration architecture. Different from the drive-controller separation architecture shown in FIG. 1, in the drive-controller integration architecture, the engine 121 has the drive slot, the drive 133 may be directly deployed in the engine 121, and the back-end interface 126 is an optional configuration. When the storage space of the system is insufficient, more drives or drive enclosures may be connected through the back-end interface 126.

This application may be applied to an application scenario of a distributed storage system. The distributed storage system is a system that stores data on a plurality of independent storage nodes in a scattered way. A conventional network storage system uses a centralized storage array to store all data. Performance of the storage array is not only a bottleneck of system performance, but also a focus of reliability and security, which cannot meet a requirement of a large-scale storage application. The distributed network storage system uses an expandable system structure, and uses the plurality of storage nodes to share storage load. The distributed network storage system not only improves system reliability, availability, and access efficiency, but also is easy to expand.

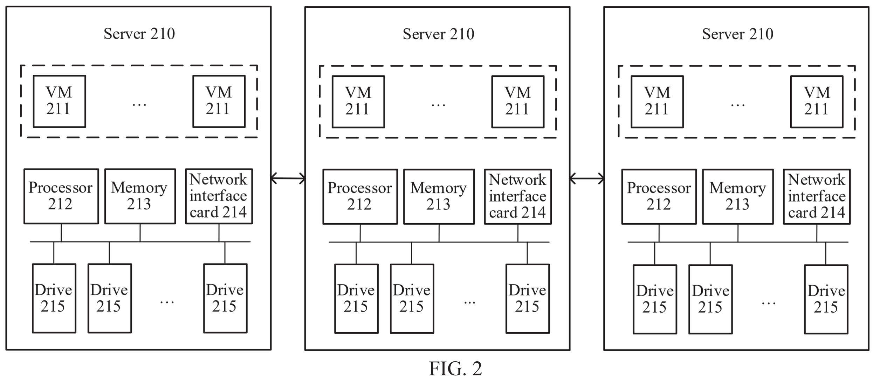

FIG. 2 shows an example of a distributed storage system using a fully converged architecture. The distributed storage system shown in FIG. 2 includes a server cluster. The server cluster includes one or more servers 210 (where three servers 210 are shown in FIG. 2, but the system is not limited to the three servers 210). The servers 210 may communicate with each other. The server 210 is a device that has both a computing capability and a storage capability, for example, a server or a desktop computer. In terms of software, each server 210 has an operating system. A virtual machine 211 may be created on the server 210. Computing resources required by the virtual machine 211 is from a local processor 212 and a local memory 213 of the server 210, and storage resources required by the virtual machine 211 may be from a local drive 215 of the server 210, or may be from a drive 215 of another server 210. In addition, various applications may be run in the virtual machine 211, and a user may trigger a data access request via the application in the virtual machine 211.

In terms of hardware, as shown in FIG. 2, the server 210 includes at least the processor 212, the memory 213, a network interface card 214, and the drive 215. The processor 212, the memory 213, the network interface card 214, and the drive 215 are connected through a bus. The processor 212 and the memory 213 are configured to provide the computing resources. Specifically, the processor 212 may include one or more central processing units (central processing units, CPUs), and one CPU may have one or more CPU cores. A quantity of CPUs and a quantity of CPU cores are not limited in this embodiment. The processor 212 is configured to process a data access request from the outside of the server 210 or a request generated inside the server 210. For example, when receiving data write requests sent by the user, the processor 212 temporarily stores data in the data write requests in the memory 213. When a total amount of data in the memory 213 reaches a specific threshold, the processor 212 sends the data stored in the memory 213 to the drive 215 for persistent storage. In addition, the processor 212 is further configured to perform data computing or processing, for example, metadata management, data deduplication, data compression, data parity, storage space virtualization, and address translation.

The memory 213 is an internal storage that directly exchanges data with the processor, can read/write data at any time at a high speed, and is used as a temporary data storage of an operating system or another running program. The memory includes at least two types of storages. For example, the memory may be a random access memory or a read-only memory (Read-Only Memory, ROM). For example, the random access memory is a dynamic random access memory (Dynamic Random Access Memory, DRAM) or a storage class memory (Storage Class Memory, SCM). The DRAM is a semiconductor memory, and is a volatile memory (volatile memory) device like most random access memories (Random Access Memories, RAMs). The SCM is a composite storage technology that combines features of both a conventional storage apparatus and a storage. The storage class memory can provide a faster read/write speed than the drive, but has a slower access speed than the DRAM and lower costs than the DRAM. However, the DRAM and the SCM are merely examples for description in embodiments. The memory may further include another random access memory, for example, a static random access memory (Static Random Access Memory, SRAM). For example, the read-only memory may be a programmable read-only memory (Programmable Read-Only Memory, PROM) or an erasable programmable read-only memory (Erasable Programmable Read-Only Memory, EPROM). In addition, the memory 213 may alternatively be a dual line memory module or a dual in-line memory module (Dual In-line Memory Module, DIMM for short), that is, a module formed by a dynamic random access memory (DRAM), and may alternatively be a solid-state drive (Solid-State Drive, SSD). In an actual application, a plurality of memories 213 and different types of memories 213 may be configured in the server 210. A quantity and types of the memories 213 are not limited in this embodiment. In addition, the memory 213 may be configured to have a power failure protection function. The power failure protection function means that the data stored in the memory 213 is not lost when the system experiences power failure and then gets powered on. A memory having the power failure protection function is referred to as a non-volatile memory. The network interface card 214 is configured to communicate with another application server 210.

The drive mentioned in this application is configured to provide the storage resources, for example, store data. The drive may be a magnetic disk or another type of storage medium. The magnetic disk is, for example, a hard disk drive (Hard Disk Drive, HDD), and the another type of storage medium is, for example, a solid-state drive (Solid-state drive or Solid-state disk, SSD), a shingled magnetic recording drive, or a magnetic tape.

Certainly, the distributed storage system using the fully converged architecture shown in FIG. 2 is merely used as an example for description. In an actual application, the distributed storage system may alternatively use a storage-compute coupled architecture. Different from the fully converged architecture shown in FIG. 2, in the storage-compute coupled architecture, the virtual machine may not be created on each server 210, and the processor 212 on each server 210 may receive an external data access request to perform corresponding data reading/writing processing.

Alternatively, the distributed storage system may use a storage-compute decoupled architecture. In this application, a node configured to run the application that triggers the data access request is referred to as a computing node. For example, the computing node is the application server 100 shown in FIG. 1 or the VM 211 shown in FIG. 2. In this application, a node configured to process the data access request is referred to as a storage node. In the storage-compute coupled architecture, the computing node and the storage node are deployed on a same physical device. In the storage-compute decoupled architecture, the computing node and the storage node are deployed on different physical devices.

Alternatively, the distributed storage system may use a memory fabric (memory fabric, MF) architecture. Different from the distributed storage system using the storage-compute decoupled architecture, in a storage system using the MF architecture, storage nodes include different types of storage media, for example, include storage media such as the DRAM, the SCM, and the drive. The different types of storage media all provide memory interfaces that can be directly accessed by the processor. In addition, various types of memories included in the storage nodes form a storage pool.

The storage system may include a management node (not shown in FIG. 1 or FIG. 2). The management node is configured to create and manage the storage pool. Optionally, the management node is a node selected from the storage nodes.

Not every storage node in the storage system is required to contribute storage space to the storage pool. The storage pool may cover only a part of the storage nodes in a cluster. In some application scenarios, two or more storage pools may alternatively be created in the storage system. Each storage pool covers one or more storage nodes, and the storage nodes provide storage space for the storage pool. Storage nodes occupied by different storage pools may or may not be the same. In conclusion, the storage pool in this embodiment is established based on at least two storage nodes, and the storage space included in the storage pool is from at least two different types of storages.

In terms of creation of the storage pool, each storage node may periodically report status information of the storage to the management node through a heartbeat channel. One or more management nodes may be deployed. The management node may be deployed in the storage system as an independent node or deployed together with the storage node. In other words, one or more storage nodes functions as the management node. The status information of the storage includes but is not limited to: types and health statuses of various storages included in the storage nodes, a total capacity and an available capacity of each type of the storage, and the like. The management node creates the storage pool based on collected information. The "create" is to centralize storage space provided by the storage nodes as a storage pool for unified management. Therefore, physical space of the storage pool is from various storages included in the storage nodes. However, in some scenarios, the storage node may selectively provide the storage for the storage pool based on a situation of the storage node, for example, based on the health status of the storage. In other words, it is possible that some storages in some storage nodes are not a part of the storage pool.

After collecting the information, the management node needs to perform unified addressing on the storage space included in the storage pool. Through unified addressing, each segment of space of the storage pool has a unique global address. For the global address, space indicated by the global address is unique in the storage pool, and each storage node 20 knows a meaning of the address. After physical space is allocated to a segment of space of the storage pool, a global address of the space has a corresponding physical address. The physical address indicates a specific storage of a specific storage node that the space represented by the global address is actually in and an offset of the space in the storage, that is, a location of the physical space. Each segment of space herein may be a "page".

In an actual application, to ensure data reliability, an erasure code (erasure code, EC) parity mechanism or a multi-copy mechanism is usually used to implement data redundancy. The EC parity mechanism is to divide data into at least two data fragments, and calculate parity fragments of the at least two data fragments based on a specific parity algorithm. When one of the data fragments is lost, the data may be recovered by using another data fragment and another parity fragment. In this case, for the data, a global address of the data is a set of a plurality of fine-grained global addresses, and each fine-grained global address corresponds to a physical address of one data fragment/parity fragment. The multi-copy mechanism is to store at least two same data copies, and store the at least two data copies in two different physical addresses. If one of the data copies is lost, another data copy can be used for recovery. Therefore, for the data, a global address of the data is also a set of a plurality of finer-grained global addresses, and each fine-grained global address corresponds to a physical address of one data copy.

The management node may allocate physical space to each global address after creating the storage pool, or may allocate physical space to a global address corresponding to a data write request when receiving the data write request. A correspondence between each global address and a physical address of each global address is recorded in an index table. The management node synchronizes the index table to each storage node. Each storage node stores the index table, to help query the index table for the physical address corresponding to the global address during subsequent data reading/writing.

When there is a new storage node adding to the storage system, the management node collects node update information, includes the new storage node in the storage pool, performs addressing on storage space included in the storage node to generate a new global address, and then refreshes a correspondence between a partition and the global address (this is because a total quantity of partitions remains unchanged regardless of capacity expansion or reduction). The capacity expansion is also applicable to a case in which memories or drives are added to some storage nodes. The management node periodically collects status information of the storages included in the storage nodes. If a new storage is added, the management node includes the new storage in the storage pool, performs addressing on new storage space to generate a new global address, and then refreshes a correspondence between a partition and the global address. Similarly, the storage pool provided in this embodiment also supports capacity reduction. The capacity reduction is to reduce a quantity of drives in the storage pool. Data on a drive whose capacity is to be reduced is moved to another drive, so that an overall external physical capacity is reduced. However, the quantity of partitions does not change, and only the correspondence between the global address and the partition needs to be updated.

A health status of the drive directly affects security of the data on the drive. To improve security of data in the storage system, the storage system may identify and isolate a faulty drive based on multi-dimensional data on the entire drive. The multi-dimensional data on the entire drive is, for example, self-monitoring, analysis, and reporting technology (self-monitoring, analysis, and reporting technology, SMART) data, input/output (input/output, I/O) data, or growth defected list (grown defected list, GList) data.

However, when the storage system determines, based on the multi-dimensional data on the entire drive, that the drive is faulty, usually, only a local area of the drive is damaged, and the local area generally causes only a part of physical space in the drive to be unavailable. If the storage system performs entire drive isolation on the drive, available physical space in the drive is wasted. As a capacity of the drive continuously increases, a price of the drive also rises, and costs of replacing the drive continuously increase. In addition, performing redundancy recovery on the data on the entire drive by the storage node occupies longer duration and consumes more storage resources and computing resources.

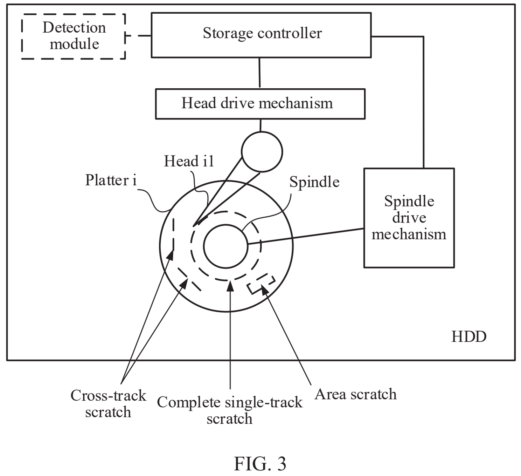

FIG. 3 schematically shows a possible structure of an HDD. As shown in FIG. 3, the HDD includes a storage controller, a head drive mechanism, a spindle drive mechanism, a spindle, and a plurality of platters (also referred to as discs). A quantity of platters in the HDD is not limited in this application. FIG. 3 schematically shows one platter (referred to as a platter i) in the HDD. Each platter may include two platter surfaces (surfaces for short), and two surfaces of the platter i are respectively denoted as a surface i1 and a surface i2. One head is further configured for each surface in the HDD. In this application, a head corresponding to the surface i1 is referred to as a head i1, and a head corresponding to the surface i2 is referred to as a head i2. FIG. 3 schematically shows the surface i1 and the head i1.

The spindle is driven by the spindle drive mechanism to rotate at a high speed, the platter rotates with the spindle, and the head moves under drive of the head drive mechanism. The storage controller may control the head drive mechanism to move the head to a specified location on a corresponding surface, and then store data in physical space corresponding to the location or read data from the physical space corresponding to the location.

Different heads are usually configured to access different surface locations. In other words, different heads generally correspond to different physical space. When a specific head in the HDD is faulty, physical space corresponding to the head is unavailable, but physical space corresponding to other heads can still continue to provide available physical space for a storage system. If the storage system isolates all physical space in the HDD, the available physical space in the HDD is wasted.

This application provides a storage system. The storage system may be any storage system described above, and at least one storage node in the storage system has a precise identification function and a precise isolation function. The storage node having the functions can identify a damaged/faulty local area in a drive, and a fault in the local area causes a part of physical space in the drive to be unavailable. The part of physical space is isolated, and other available physical space in the drive continues to be used. In this way, when a local area in a storage component is damaged, the storage node does not need to perform entire drive isolation on the drive. This not only saves the other available physical space in the drive, but also reduces a waste of computing resources and other storage resources caused by restoring data on the entire drive.

The storage node may include a control unit and a communication unit. The communication unit is configured to connect to one or more drives. The control unit is configured to: process a data access request from the outside of the storage node or a request generated inside the storage node, and send the data to the drive for persistent storage, or read the data from the drive.

A type of the storage node is not limited in this application. For example, the storage node may be a storage device, the control unit may be a controller in the storage device, and the controller in the storage device is configured to connect to one or more drives. For example, the storage device may be a drive enclosure. For example, the storage node may be a server, and the control unit may be a processor in the server. For example, the storage node may be a centralized storage system (or a storage array), and the control unit may be an engine of the centralized storage system or a controller in the engine. For example, the storage node may be a storage node in a distributed storage system, and the control unit is a processor in the storage node. An implementation of the control unit is not limited in this application. For example, the control unit may include a processor and a memory, or the control unit may include a DPU. Alternatively, the control unit may be a network interface card. The communication unit may be an interface, a network interface card, or the like.

The drive may include a storage controller and a storage component. The storage component is configured to provide physical space for data storage for the storage controller. The storage controller is configured to communicate with the control unit, receive a data access request sent by the control unit, and send response information of the data access request to the control unit. The storage controller is further configured to control the storage component to access specified physical space.

The storage component may include a plurality of local areas of a same type, and the local area in the storage component is for providing a part of physical space in all physical space provided by the storage component. For example, the drive is an HDD. The storage component may include a plurality of heads in the HDD. Each head can work independently. The local area may be one of the plurality of heads, and physical space corresponding to the local area may be physical space corresponding to the head. Alternatively, the local area may be a group of heads in the plurality of heads, and physical space corresponding to the group of heads may be a union set of physical space corresponding to all heads in the group of heads. A location of each head in the group of heads is not limited in this application. For example, all the heads in the group of heads may correspond to a same platter or a same surface. Alternatively, an example in which the drive is the HDD is still used. The storage component may include a plurality of platters in the HDD. The local area may be one of the plurality of platters, one surface of one platter, or an area on one surface.

The drive may further include another storage component of a type different from that of the storage component, and a plurality of types of storage components may jointly provide physical space for data storage. The example in which the drive is the HDD is still used. The plurality of platters and the plurality of heads in the drive may be different types of storage components. The plurality of platters and the plurality of heads cooperate with each other to jointly provide physical space for data storage for the storage controller, to support the storage controller in reading data from or writing data into the physical space.

The following describes, by using examples, possible implementations in which the storage node implements the foregoing functions.

In a first possible implementation, at least one drive of the storage node has the precise identification (or partial identification) function. The drive having the precise identification function can identify a damaged local area, and a damage of the local area means that corresponding physical space (referred to as target physical space) is unavailable. The drive may further transmit notification information to the control unit, to indicate to isolate the physical space. In the storage system provided in this application, the control unit has the precise isolation (or partial isolation) function. After obtaining the notification information, the control unit may isolate the target physical space, and continue to use available physical space other than the target physical space in the drive.

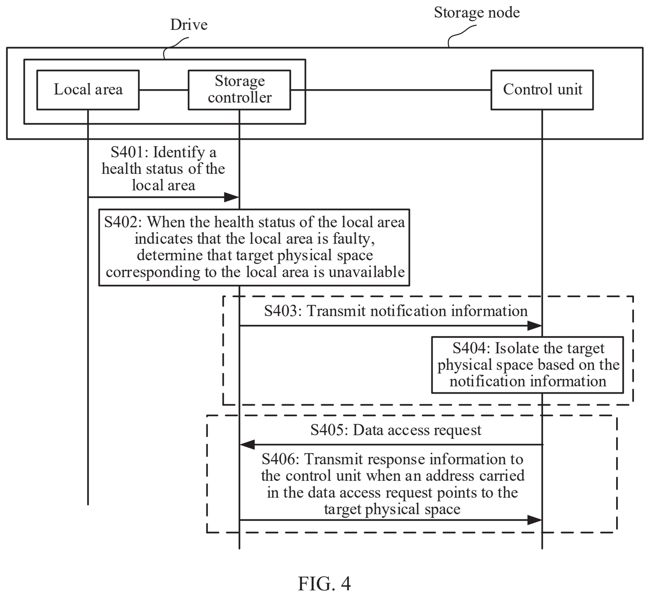

According to the first possible implementation, the following describes, by using an example, a method procedure applied to the storage node. The method procedure is performed, so that the storage node can implement the precise identification function and the precise isolation function. As shown in FIG. 4, the method procedure may include S401 and S402.

S401: The storage controller identifies a health status of the local area in the drive.

The storage controller may identify the health status of the local area in the drive. The health status of the local area indicates that the local area is faulty or not faulty. The local area may be any local area described above.

A manner in which the storage controller identifies the health status of the local area in the drive is not limited in this application. Optionally, the storage controller may obtain running information of the local area, and identify the health status of the local area based on the running information.

The running information may include values of one or more physical attributes of the local area. The one or more physical attributes may include at least one of the following physical attributes: a temperature, a size, a motion parameter, and an electrical parameter. The electrical parameter includes at least one of the following: a resistance, a power, and a channel parameter. Optionally, the physical attribute of the local area may further include a comprehensive physical attribute, and a value of the comprehensive physical attribute is related to values of a plurality of physical attributes. For example, the value of the comprehensive physical attribute may be related to values of the foregoing two physical attributes.

For example, the drive is the HDD shown in FIG. 3, and the local area is the head i1 shown in FIG. 3. When the storage controller controls the head i1 to read data, the head i1 reads an analog signal from the surface i1. After equalization (for example, amplification, filtering, and/or shaping) is performed on the analog signal, read data is obtained by performing analog-to-digital (analog-to-digital, A/D) conversion on an equalized analog signal. Deterioration of a quality parameter of a head signal of the head i1 causes reduction of reliability of the data read by the head i1, resulting in unavailability of the head i1. Therefore, a physical attribute of the head i1 may include the quality parameter of the head signal of the head i1. The quality parameter of the head signal may include a seek positioning error, a signal-to-noise ratio of the head signal, an amplitude of the head signal, a bit error rate (bit error rate, BER) of the head signal, and/or the like. The data obtained by performing analog-to-digital conversion on the analog signal read by the head i1 has some bit errors (bit errors). Correct data can be obtained only through error checking and correcting (error checking and correcting, ECC). The bit error rate (bit error rate, BER) is a parameter obtained by dividing a quantity of error bits by a total quantity of bits in a bit stream. The BER may reflect a signal-to-noise ratio of the signal read by the head i1, so as to reflect performance and a health status of the head i1. The seek positioning error of the head i1 may be a repeatable runout (repeatable runout) or a non-repeatable runout (non-repeatable runout).

An electrical parameter of the head i1 may include a resistance of the head i1. The head is a magneto-sensitive resistor. If a reference resistance (a resistance without an applied magnetic field) of the head i1 changes, the BER of the head i1 also deteriorates, resulting in unavailability of the head i1.

A motion parameter of the head i1 may be a flying height (fly height for short) of the head i1. If the fly height changes, an amplitude and the signal-to-noise ratio of the signal read by the head i1 deteriorate, resulting in unavailability of the head i1.

For example, the local area is a magnetic arm corresponding to the head i1. A motion parameter of the magnetic arm may be a swing parameter, a positioning parameter, or the like of the magnetic arm, and physical space corresponding to the magnetic arm may be physical space corresponding to the corresponding head.

A detection result of the physical attribute generally does not depend on extensive I/O access to corresponding physical space, and the health status of the local area is identified based on the detection result of the physical attribute. This helps isolate the physical space before a computing node extensively accesses the corresponding physical space, to improve data reliability and reduce a delay caused by a failure to access the physical space.

A manner in which the storage controller obtains the running information is not limited in this application. As shown in FIG. 3, the HDD may include a detection module. The detection module may be configured to detect the value of the physical attribute of the local area (for example, the head i1), and the storage controller may obtain the detection result from the detection module. A quantity, locations, and types of detection modules are not limited in this application. For example, the detection module in the HDD may include a thermistor disposed on the head. An independent thermistor may be disposed on each head, and a temperature of the head is detected by using the thermistor on the head. For example, a temperature of the head i1 is detected by using a thermistor on the head i1.

Optionally, the running information may further include multi-dimensional data on the entire drive, and the storage controller may identify the health status of the local area based on the multi-dimensional data on the entire drive and the values of the one or more physical attributes of the local area.

A manner in which the storage controller determines the health status of the local area based on the running information is not limited in this application.

The following uses the head i1 as an example to describe a possible manner in which the storage controller determines, based on values of one or more physical attributes of the head i1, that the head i1 is faulty.

For example, when a single physical attribute (for example, a fly height, a BitErr error rate, or a head temperature) of the head i1 exceeds a threshold, the storage controller may determine that the head i1 is faulty.

Alternatively, for example, when a value of each of a plurality of physical attributes of the head i1 exceeds the threshold, the storage controller may determine that the head i1 is faulty.

The storage controller may automatically trigger execution of S401. Alternatively, when detecting that the drive is connected, the control unit may extend a ModePage protocol setting by using firmware (firmware, FW) of the drive. When the drive supports a local identification algorithm (also referred to as function), the storage controller may enable the local identification function to trigger the execution of S401.

The storage controller may trigger execution of step S401 for each local area in the drive. Alternatively, the storage controller may identify a suspected faulty local area based on the multi-dimensional data on the entire drive, and then trigger the execution of step S401 for the suspected faulty local area. For the head/magnetic arm of the HDD, the storage controller may determine that a head of a GList data bad block is the suspected faulty local area, and/or determine that a head corresponding to an I/O error is the suspected faulty local area, and/or determine that a head corresponding to a problem, for example, an exception in SMART data/a log page (LogPage)/an intra-drive parameter, is the suspected faulty local area. The log page is a log including statistical values of the drive, and may be for recording the running information. For example, the log page may record statistical values such as a write volume, an uncorrected error count (uncorrected error count, UNC), and a physical attribute of each local area, and record a value of a running cycle status of the drive. For a magnetic recording area (for example, a surface area) of the HDD, the storage controller may perform periodic verification (verification) scanning to record the damaged area, and/or perform scenario-based scanning, for example, area scanning triggered by an I/O bad sector, area scanning triggered through intermittent vibration, or detection of an internal platter scanning result, to determine a suspected faulty magnetic recording area.

S402: When the health status of the local area indicates that the local area is faulty, the storage controller determines that the target physical space is unavailable.

After the storage controller identifies the health status of the local area, if the local area is faulty, the storage controller may determine that the physical space corresponding to the local area is unavailable. This helps avoid the control unit continuing to access the part of physical space, to improve data reliability and reduce the delay. In addition, this helps the drive more accurately determine the available physical space, to help the drive continue to provide a reliable storage service for the storage node and reduce the waste.

For ease of description, the physical space corresponding to the local area is referred to as the target physical space in this application. As described above, the target physical space is a part of physical space in all physical space provided by the drive.

A specific type of a local area fault is not limited in this application, provided that the local area fault causes physical space corresponding to the local area fault to be unavailable. The HDD is used as an example. The fault type may be a cross-track scratch, an area scratch, a complete single-track scratch, a single-head scratch, or the like that is shown in FIG. 3. A criterion for determining that the physical space is unavailable is not limited in this application. For example, a case in which the physical space is unavailable may include that the storage controller cannot access the physical space, or that there is a high risk of fault in the physical space although the storage controller can access the physical space.

For example, the drive is the HDD. The damaged local area may be one of the plurality of heads in the HDD or a group of heads in the plurality of heads in the HDD, and the target physical space may be all physical space corresponding to the head or the group of heads. When one head is configured for a single surface in the HDD, the single head corresponds to all physical space on the single surface. Optionally, at least two heads are configured for the single surface in the HDD, and each head corresponds to a part of physical space on the surface. In this case, physical space corresponding to a single head may be a part of physical space on the single surface.

The example in which the drive is the HDD is still used. The damaged local area may be an area on one surface in the HDD. A shape or a size of the area is not limited in this application. For example, the damaged area may include an area with the cross-track scratch shown in FIG. 3 (namely, a part of areas in a plurality of tracks), and/or include an area with the complete single-track scratch shown in FIG. 3 (namely, a complete single-track area), and/or include an area with the area scratch shown in FIG. 3.

The storage controller precisely identifies the physical space corresponding to the damaged local area. This helps avoid the control unit continuing to access the part of physical space, to improve the data reliability. In addition, this helps the drive more accurately determine the available physical space, to help the drive continue to provide the reliable storage service for the storage node, prolong usage duration of the drive, and reduce a frequency of performing entire-drive isolation on the drive by the storage system, thereby helping reduce costs of the storage system, and saving storage resources and computing resources of the storage system.

Before receiving the request, the storage controller may establish a correspondence between a physical address and a logical address of the physical space. In other words, the correspondence between the physical address and the logical address of the physical space in the drive is fixed. Alternatively, the storage controller may record a physical address of the available physical space in the drive or a physical address of the unavailable physical space. After receiving the request, the storage controller may allocate the available physical space to a logical address carried in the request (that is, establish a correspondence between the logical address and the physical address). After determining that the target physical space is unavailable, the storage controller may no longer allocate the target physical space, and may continue to allocate the available physical space other than the target physical space, to avoid the computing node accessing the physical space.

Optionally, as shown in FIG. 4, after S402, the method may further include S403.

S403: The storage controller transmits notification information to the control unit.

After determining that the target physical space is unavailable, the storage controller may transmit the notification information to the control unit. The notification information indicates to isolate the target physical space.

A manner in which the storage controller transmits the notification information to the control unit is not limited in this application. Optionally, the storage controller may send the notification information to the control unit. Alternatively, the storage controller may store the notification information in the drive. For example, the storage controller may store the notification information in a target storage location in the drive, and the control unit may read the notification information from the target storage location. Alternatively, the storage controller may store the notification information in a target file name, and the control unit may obtain the notification information by searching the target file name (for example, "part-err-log"). The control unit may periodically search for the notification information in the drive. Alternatively, the storage controller may notify the control unit of the local area fault in the drive by using an error event or including an error code in an I/O response. Correspondingly, the control unit may read, according to an extended protocol, the notification information recorded in the drive.

Optionally, as shown in FIG. 4, after S403, the method may further include S404.

S404: The control unit isolates the target physical space based on the notification information.

After obtaining the notification information, the control unit may isolate the target physical space based on the notification information. This helps the control unit no longer allocate the target physical space subsequently, to avoid continuing to access the part of physical space, improve the data reliability, and reduce the delay.

The following describes, by using an example, content of the notification information and a possible manner in which the control unit isolates the target physical space based on the notification information.

Optionally, the notification information may include an address for pointing to the target physical space, and the address may indicate all or a part of physical space in the target physical space. The notification information may indicate that the address is unavailable.

The storage controller generally uses the physical address of the physical space to write data into or read data from the physical space. After determining the target physical space, the storage controller may determine the physical address of the target physical space. The HDD is used as an example. A smallest area for data storage on a platter surface is referred to as a sector (sector), and the physical address of the physical space is cylinder-head-sector (cylinder-head-sector, CHS).

The physical address of the physical space in the drive is generally an internal physical concept of the storage controller in the drive. The storage controller usually virtualizes the physical space into a logical block, to provide the logical block for the control unit to use. Therefore, the control unit may generally sense the logical address of the physical space, for example, a logical block address (logical block address, LBA).

The address in the notification information may be a physical address (for example, the CHS), or a logical address (for example, the LBA). Alternatively, the notification information may be associated with the physical address and a logical address in which the target physical space is stored. For example, addresses in the notification information may include an LBA 0 to an LBA 100 and an LBA 200 to an LBA 300. The HDD is used as an example. An LBA N may represent a logical N sector.

In this application, the address indicating all the physical space in the target physical space is referred to as a target address. Optionally, the notification information may include the target address. After obtaining fault information, the control unit may isolate the target address, or isolate the physical space (namely, the target physical space) indicated by the target address. The following describes a possible implementation in which the control unit isolates the target address.

Optionally, for an address (referred to as a first address) into which data has been written and that is in the target address, the control unit may perform redundancy recovery on the data in the address. The control unit may store the recovered data in other available physical space, and refresh a correspondence between a storage address and a logical address of the data. This helps improve reliability of the data that has been written by the storage node. A specific manner in which the control unit recovers the data is not limited in this application. For example, data stored in the logical address is a data fragment, a parity fragment, or a data copy that is stored based on a redundancy mechanism. The control unit may recover, based on the corresponding redundancy mechanism, the data stored in the logical address.

Optionally, the control unit may not allocate the target address to a storage address in a storage pool, but allocate an available address other than the target address in the drive to the storage address in the storage pool. For example, the control unit may update an available address recorded in the drive. The available address in the drive is an address of allocatable physical space in the drive, and an updated available address does not include the target address. In this way, a delay of a data write request is reduced, and the data reliability is also improved.

Optionally, the control unit may determine a capacity (also referred to as a size) of the physical space corresponding to the target address, to determine a lost capacity of the drive, and update an available capacity of the drive.

Optionally, the control unit may update the storage pool based on the lost available capacity of the drive. For example, the control unit may reduce a capacity of the storage pool based on the lost available capacity, to reduce an overall external physical capacity of the storage pool. Alternatively, for example, the control unit may use spare physical space to replace lost physical space in the storage pool, and the overall external physical capacity of the storage pool remains unchanged. The spare physical space is, for example, hot spare space or redundant (overprovision, OP) space. The hot spare space is space reserved in the storage pool. A part of the reserved space is provided for a faulty drive in the storage pool as hot spare reserved space for data recovery.

Optionally, the control unit may determine whether the lost capacity of the drive exceeds a hot spare capability of the storage pool. When the lost capacity exceeds the hot spare capability of the storage pool, the control unit may set the entire drive to pre-failure isolation and replace the entire drive. The hot spare capability may be a capacity threshold determined based on a total capacity of the hot spare space.

In this application, the control unit is not limited to independently completing the foregoing isolation operation. Optionally, the control unit may perform the isolation operation together with a control unit of another storage node.

In the foregoing descriptions, an example in which the target address is the logical address is used. Optionally, after determining the physical address of the target physical space, the storage controller may generate and transmit fault information to the control unit, where the fault information includes the physical address of the target physical space. In other words, the target address may be the physical address. After obtaining the fault information, the control unit may determine, based on the correspondence between the physical address and the logical address, the logical address corresponding to the physical address, and then isolate the LBA.

In this application, the physical space into which the data is written and that is in the target physical space is referred to as first physical space, and an address indicating the first physical space is referred to as a first address. Optionally, the notification information may include the first address. After receiving the notification information, the control unit may perform redundancy recovery on the data in the first address. For content that the control unit performs redundancy recovery on the data in the first address, refer to the foregoing related content. Details are not described herein again.

Because the data has been written into the target address, the control unit may recover the data in the target address, store the recovered data in the other available physical space, and refresh the correspondence between the storage address and the logical address of the data. Optionally, the control unit may not allocate the first address to the storage address in the storage pool, but allocate an available address other than the first address in the drive to the storage address in the storage pool.

Optionally, the notification information includes capacity information, the capacity information is for determining a capacity of the target physical space, and the notification information indicates that the drive loses the capacity. The control unit may determine a lost available capacity of the storage pool based on status information, and then update the storage pool based on the lost available capacity. For a possible manner in which the control unit updates the storage pool based on the lost available capacity of the drive, refer to the foregoing related content. Details are not described herein again.

In this application, the control unit is not limited to independently completing the foregoing isolation operation. Optionally, the control unit may perform the isolation operation together with the control unit of the another storage node (for example, a management node).

Optionally, the notification information may include at least one of the target address, the first address, and the capacity information.

Optionally, as shown in FIG. 4, after S402, the method may further include S405 and S406.

S405: The control unit sends a data access request to the storage controller.

The control unit may send the data access request to the storage controller, a data read request is for requesting to read data from an address carried in the request, and a data write request is for requesting to write data into an address carried in the request.

S406: The storage controller transmits response information to the control unit when an address carried in the data access request points to the target physical space, where the response information indicates that the address carried in the data access request is unavailable.

After receiving the data access request, the storage controller may determine whether the address carried in the request points to the target physical space. If it is determined that the address carried in the request points to the target physical space, the storage controller may transmit the response information to the control unit, where the response information indicates that the address carried in the data access request is unavailable. This helps avoid the drive writing the data into the damaged area based on the request, and also improves the data reliability.

That the address carried in the request points to the target physical space means that physical space indicated by the address belongs to the target physical space. In this application, the address is not limited to indicating all the physical space in the target physical space.

Optionally, the storage controller may not count the I/O error into the multi-dimensional data on the entire drive, to avoid reporting an entire drive pre-failure event externally due to a case in which the threshold is reached and due to a case in which repeated detection is performed on the damaged area in the drive. This avoids entire drive isolation caused by a case in which the target physical space that has been partially isolated is accessed.

In a second possible implementation, the control unit of the storage node has the precise identification function for at least one drive. The control unit may obtain underlying information of the local area in the drive, identify a damaged local area based on the obtained underlying information, and determine physical space (namely, target physical space) corresponding to the local area. The control unit further has the precise isolation function. After determining the target physical space, the control unit may isolate the target physical space, and continue to use available physical space other than the target physical space in the drive.

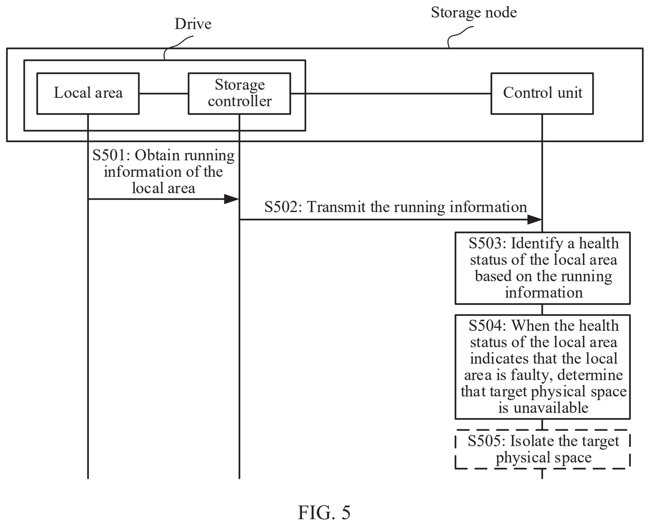

According to the second possible implementation, the following describes, by using an example, another method procedure applied to the storage node. The method procedure is performed, so that the storage node can implement the precise identification function and the precise isolation function. As shown in FIG. 5, the method procedure may include S501 to S504.

S501: The storage controller obtains running information of the local area.

The storage controller may obtain the running information of the local area. For the running information and a manner of obtaining the running information, refer to related content in S401 for understanding. For example, the running information may include values of one or more physical attributes of the local area, and the one or more physical attributes may include at least one of the following physical attributes: a temperature, a size, a motion parameter, and an electrical parameter. For the physical attribute, refer to the related content in S401 for understanding. Details are not described herein again. The local area may be any local area described above.

S502: The storage controller transmits the running information to the control unit.

After obtaining the running information of the local area, the storage controller may transmit the running information to the control unit. Correspondingly, the control unit may obtain the running information of the local area. This helps the control unit precisely identify the damaged local area based on the running information, and determine a part of unavailable physical space in the drive.

S503: The control unit identifies a health status of the local area based on the running information.

After obtaining the running information, the control unit may identify the health status of the local area in the drive based on the running information. A manner in which the control unit determines the health status of the local area based on the running information is not limited in this application. For the manner in which the control unit determines the health status of the local area based on the running information, refer to the related content in S401.

The running information of the local area includes the value of the physical attribute of the local area. Because a detection result of the physical attribute generally does not depend on extensive I/O access to corresponding physical space, the health status of the local area is identified based on the detection result of the physical attribute. This helps isolate the physical space before a computing node extensively accesses the corresponding physical space, to improve data reliability and reduce a delay caused by a failure to access the physical space.

S504: When the health status of the local area indicates that the local area is faulty, the control unit determines that the target physical space is unavailable.

After the control unit identifies the health status of the local area, if the local area is faulty, the control unit may determine that the physical space corresponding to the local area is unavailable. This helps avoid the control unit continuing to access the part of physical space, to improve data reliability and reduce the delay. In addition, this helps the drive more accurately determine the available physical space, to help the drive continue to provide a reliable storage service for the storage node and reduce the waste.

For ease of description, the physical space corresponding to the local area is referred to as the target physical space in this application. As described above, the target physical space is a part of physical space in all physical space provided by the drive.

A specific type of a local area fault is not limited in this application, provided that the local area fault causes physical space corresponding to the local area fault to be unavailable. For the type of the local area fault and the corresponding target physical space, refer to related content in S402 for understanding. Details are not described herein again.

The control unit precisely identifies the physical space corresponding to the damaged local area. This helps avoid the control unit continuing to access the part of physical space, to improve the data reliability and reduce the delay. In addition, this helps the control unit more accurately determine the available physical space in the drive, to help the control unit continue to use the physical space provided by the drive.

As shown in FIG. 5, optionally, after S504, the method may further include S505.

S505: The control unit isolates the target physical space.

After determining that the target physical space is unavailable, the control unit may isolate the target physical space. This helps the control unit no longer allocate the target physical space subsequently, to avoid continuing to access the part of physical space, improve the data reliability, and reduce the delay.

The following describes, by using an example, a possible manner in which the control unit isolates the target physical space.

Optionally, after determining the target physical space, the control unit may determine an address (referred to as a target address) of the target physical space, and then isolate the target address. For example, the control unit may convert a physical address of a target physical address into a logical address, and then determine that the logical address is unavailable. The control unit may not allocate the target address to a storage address in a storage pool, but allocate an available address other than the target address in the drive to the storage address in the storage pool. For example, the control unit may update an available address recorded in the drive. The available address in the drive is an address of allocatable physical space in the drive, and an updated available address does not include the target address. In this way, a delay of a data write request is reduced, and the data reliability is also improved.

Optionally, after determining the target physical space, the control unit may determine an address (referred to as a first address) of physical space (referred to as first physical space) into which data has been written and that is in the target physical space, and the control unit may perform redundancy recovery on the data in the first address. The control unit may store the recovered data in other available physical space, and refresh a correspondence between a storage address and a logical address of the data. This helps improve reliability of the data that has been written by the storage node. A specific manner in which the control unit recovers the data is not limited in this application. For example, data stored in the logical address is a data fragment, a parity fragment, or a data copy that is stored based on a redundancy mechanism. The control unit may recover, based on the corresponding redundancy mechanism, the data stored in the logical address.

Optionally, the control unit may determine a capacity (also referred to as a size) of the target physical space, to determine a lost capacity of the drive, and update an available capacity of the drive. The control unit may update the storage pool based on the lost available capacity. For example, the control unit may update a capacity of storage space in the storage pool. For example, the control unit may use spare physical space to compensate for lost physical space in the storage pool. For example, the control unit may determine whether the loss capacity of the drive exceeds a hot spare capability of the storage pool. When the lost capacity exceeds the hot spare capability of the storage pool, the control unit may set the entire drive to pre-failure isolation and replace the entire drive.

In this application, the control unit is not limited to independently completing the foregoing isolation operation. Optionally, the control unit may perform the isolation operation together with a control unit of another storage node.

In the foregoing descriptions, an example in which the drive is an HDD is used. Optionally, the drive may be another type of storage medium except the HDD, for example, a magnetic tape or an SSD.

A local area of the magnetic tape may be a part of heads, a part of magnetic tape media, or a part of components related to operation of the head and the magnetic tape. A physical attribute of the head may include at least one of the following information: a read/write error rate of the head, a head temperature, a read/write test error ratio, and the like. The target physical space may be physical space in a magnetic tape medium segment corresponding to a damaged head.

A local area of the SSD may be a part of SSD controllers or a part of SSD logic gate (not and, NAND) media. The SSD has a medium problem, and the medium problem may be an exception in accessing a part of media by the controller, or may be that a part of flash memory chips (dies) including stored data in the NAND medium have problems. The target physical space may be a part of physical space in a NAND flash memory. For example, the target physical space may be physical space in one or more flash memory chips (dies) or physical space in one or more blocks (blocks) in the flash memory chip.

The foregoing describes in detail the storage system and the method related to the storage system according to this application. To better implement the foregoing solutions of this application, correspondingly, the following further provides related devices configured to assist in implementing the foregoing solutions through cooperation.

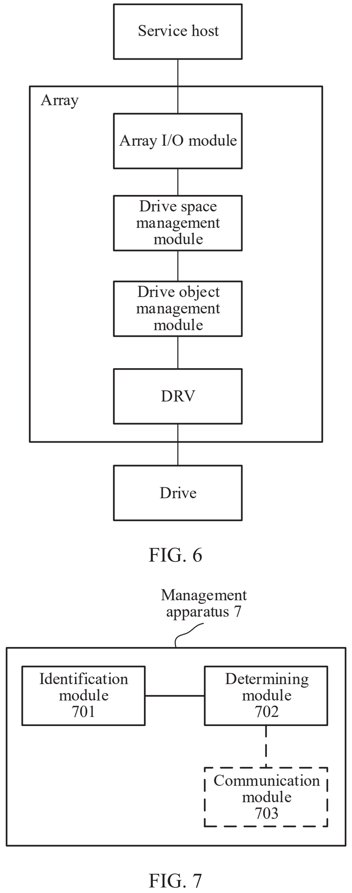

FIG. 6 shows an example of another possible diagram of a storage system. As shown in FIG. 6, the storage system includes a service host, an array (or an array controller), and a drive. The service host is connected to the array controller through communication, and the array controller is connected to the drive. In some examples, the array may be replaced with a server. The service host can be understood as the application server or the computing node described above.

As shown in FIG. 6, the array may include a driver group (Driver Group, DRV) running on an operating system (operating system, OS), a drive object management module, a drive space management module, and an array input/output (input/output, I/O) module.

The drive may be connected to the DRV, and the DRV is connected to the drive object management module. The drive may provide an algorithm to detect a damaged local area (for example, a head or a platter area) in a storage component, for example, perform S401 and S402, notify the drive object management module via the DRV, for example, perform S403, to transmit notification information to the drive object management module.

The drive object management module may be configured to deliver a command to the drive to obtain information about the damaged local area, for example, perform S403, to perform space isolation for no longer access. The drive object management module is connected to the drive space management module, and the drive object management module may notify the drive space management module. Alternatively, the drive object management module may detect the damaged local area by using an algorithm, for example, perform S502 and S503.

The drive space management module is configured to perform redundancy repair and hot spare space replacement on a logical address of the damaged local area, and externally update a lost capacity, for example, perform S404 or S505. The drive space management module is connected to the array I/O module. The drive space management module may update a logical address of available physical space to the array I/O. The array I/O module is connected to the service host, and is configured to receive a data access request sent by the service host, and allocate the logical address of the available physical space to the data access request, but not allocate a logical address of unavailable physical space, so that the service host cannot access physical space corresponding to the damaged local area in the drive.

For a function of the array, refer to the foregoing descriptions of a function of the control unit of the storage node for understanding. A division manner of modules in the control unit is not limited in this application. FIG. 6 is merely used as an example. The following describes another division manner of the modules in the control unit.

FIG. 7 shows an example of a management apparatus for a drive according to this application. The management apparatus may be the drive or the storage controller in the drive described above, or may be disposed in the storage controller. As shown in FIG. 7, the management apparatus 7 includes an identification module 701 and a determining module 702.

The identification module 701 is configured to identify a health status of a local area in the drive. For a specific implementation, refer to related descriptions in step S401 in FIG. 4. Details are not described herein again.

The determining module 702 is configured to: when the health status of the local area indicates that the local area is faulty, determine that a part of physical space is unavailable. For a specific implementation, refer to related descriptions in step S402. Details are not described herein again.

Optionally, the management apparatus 7 may further include a communication module 703. The communication module 703 is configured to transmit notification information to a control unit. For a specific implementation, refer to related descriptions in step S403. Details are not described herein again.

Optionally, the communication module 703 may be further configured to: receive a data access request from the control unit; and transmit response information to the control unit when an address carried in the data access request points to the part of physical space, where the response information indicates that the address carried in the data access request is unavailable. For a specific implementation, refer to related descriptions in step S405 and step S406. Details are not described herein again.

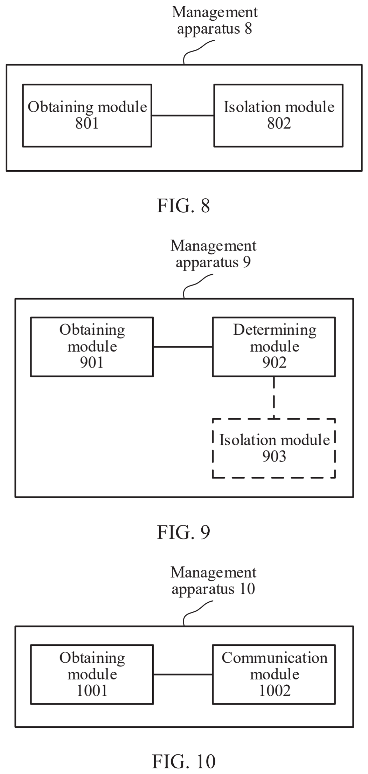

FIG. 8 shows an example of a management apparatus for a drive according to this application. The management apparatus may be the control unit described above, or may be disposed in the control unit. As shown in FIG. 8, the management apparatus 8 includes an obtaining module 801 and an isolation module 802.

The obtaining module 801 is configured to obtain notification information from the drive. For a specific implementation, refer to related descriptions in step S403 in FIG. 4. Details are not described herein again.

The isolation module 802 is configured to isolate a part of physical space. For a specific implementation, refer to related descriptions in step S404. Details are not described herein again.

FIG. 9 shows an example of a management apparatus for a drive according to this application. The management apparatus may be the control unit described above, or may be disposed in the control unit. As shown in FIG. 9, the management apparatus 9 includes an obtaining module 901 and a determining module 902.

The obtaining module 901 is configured to obtain running information of a local area. For a specific implementation, refer to related descriptions in step S502 in FIG. 5. Details are not described herein again.

The determining module 902 identifies a health status of the local area based on the running information; and when the health status of the local area indicates that the local area is faulty, determines that a part of physical space is unavailable. For a specific implementation, refer to related descriptions in step S503 and step S504. Details are not described herein again.

Optionally, the management apparatus 9 may further include an isolation module 903. The isolation module 903 is configured to isolate the part of physical space. For a specific implementation, refer to related descriptions in step S505. For example, optionally, the isolation module 903 is configured to: determine an address of the part of physical space; and update an available address in the drive. Optionally, the isolation module 903 is configured to: determine a first address of physical space into which data is written and that is in the part of physical space; and perform redundancy repair on the data in the first address. Optionally, the isolation module 903 is configured to: determine a capacity of the part of physical space; and isolate all physical space in the drive when the capacity exceeds a threshold.

FIG. 10 shows an example of a management apparatus for a drive according to this application. The management apparatus may be the drive or the storage controller in the drive described above, or may be disposed in the storage controller. As shown in FIG. 10, the management apparatus 10 includes an obtaining module 1001 and a communication module 1002.

The obtaining module 1001 is configured to obtain running information of a local area. For a specific implementation, refer to related descriptions in step S501 in FIG. 5. Details are not described herein again.

The communication module 1002 is configured to transmit running information to a control unit. For a specific implementation, refer to related descriptions in step S502. Details are not described herein again.

This application further provides a computer-readable storage medium. The computer-readable storage medium stores a computer program. When the computer program is executed by a processor, a part or all of steps recorded in any one of the foregoing method embodiments may be implemented.

An embodiment of the present invention further provides a computer program. The computer program includes instructions. When the computer program is executed by a computer, the computer is caused to perform a part or all of steps of any one of the methods.

In the foregoing embodiments, descriptions of each embodiment have respective focuses. For a part that is not described in detail in an embodiment, refer to related descriptions in other embodiments.

A person of ordinary skill in the art may understand that, the computer-readable storage medium includes any non-transitory (non-transitory) machine-readable medium that can store program code, for example, a USB flash drive, a removable hard disk drive, a magnetic drive, an optical disc, a RAM, an SSD, or a non-volatile memory (non-volatile memory).

It should be noted that, for brief description, the foregoing method embodiments are represented as a series of action combinations. However, a person skilled in the art should understand that this application is not limited to the described action sequence because some steps may be performed in other sequences or simultaneously according to this application. In addition, a person skilled in the art should further understand that embodiments described in this specification all belong to example embodiments, and the involved actions and modules are not necessarily required by this application. "A and/or B" in embodiments of this application may be understood as including two solutions: "A and B" and "A or B".

In the specification, the claims, and the accompanying drawings of this application, terms such as "first", "second", "third", and "fourth" are used for distinguishing between similar objects, but are not necessarily used for describing a specific order or sequence. It should be understood that, the terms used in such a way are interchangeable in appropriate circumstances, and this is merely a distinguishing manner used when objects with a same attribute are described in embodiments of this application.

In several embodiments provided in this application, it should be understood that the disclosed apparatus may be implemented in other manners. For example, the apparatus embodiments described above are merely examples. For example, division of the foregoing units is merely logical function division. In an actual implementation, there may be another division manner. For example, a plurality of units or components may be combined or integrated into another system, or some features may be ignored or not performed. In addition, displayed or discussed mutual couplings or direct couplings or communication connections may be implemented through some interfaces. Indirect couplings or communication connections between the apparatuses or units may be implemented in electronic, mechanical, or other forms.

The foregoing units described as separate components may or may not be physically separate, and components displayed as units may or may not be physical units, to be specific, may be located in one place, or may be distributed on a plurality of network units. A part or all of the units may be selected based on an actual requirement to achieve the objectives of the solutions in embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

Finally, it should be noted that the foregoing embodiments are merely used for describing the technical solutions of this application, rather than limiting the technical solutions of this application.

## Claims

1. A management method for a drive, wherein the drive comprises a storage controller and a storage component, the storage controller is configured to receive a data access request from a control unit of a storage node, and access, based on the data access request, physical space provided by the storage component, the method is applied to the drive, and the method comprises:
identifying a health status of a local area in the storage component, wherein the local area is for providing a part of physical space in all physical space provided by the storage component; and
when the health status of the local area indicates that the local area is faulty, determining that the part of physical space is unavailable.

2. The method according to claim 1, wherein the identifying the health status of the local area comprises:
obtaining running information of the local area, wherein the running information comprises values of one or more physical attributes of the local area; and
identifying the health status of the local area based on the running information.

3. The method according to claim 2, wherein the one or more physical attributes comprise at least one of the following physical attributes: a temperature, a size, a motion parameter, and an electrical parameter.

4. The method according to claim 3, wherein the drive is a hard disk drive HDD, the storage component comprises a plurality of heads, the local area is a part of the plurality of heads, the motion parameter comprises a head flying height, and the electrical parameter comprises a head resistance and/or a signal-to-noise ratio of a head signal.

5. The method according to any one of claims 1 to 4, wherein the method further comprises:
transmitting notification information to the control unit, wherein the notification information indicates to isolate the part of physical space.

6. The method according to claim 5, wherein the notification information comprises an address of the part of physical space, and the notification information indicates that the address of the part of physical space is unavailable.

7. The method according to claim 5 or 6, wherein the notification information comprises a first address of first physical space into which data is written and that is in the part of physical space, and the notification information indicates to perform redundancy repair on the data in the first address.

8. The method according to any one of claims 5 to 7, wherein the notification information comprises a capacity of the part of physical space, and the notification information indicates that the drive loses the capacity.

9. The method according to any one of claims 1 to 8, wherein after determining that the part of physical space is unavailable, the method further comprises:
receiving a data access request from the control unit; and
transmitting response information to the control unit when an address carried in the data access request points to the part of physical space, wherein the response information indicates that the address carried in the data access request is unavailable.

10. A management method for a drive, wherein the drive comprises a storage controller and a storage component, the storage controller is configured to receive a data access request from a control unit of a storage node, and access, based on the data access request, physical space provided by the storage component, the method is applied to the control unit, and the method comprises:
obtaining notification information from the drive, wherein the notification information is transmitted by the drive to the control unit when a local area in the storage component is faulty, the local area is for providing a part of physical space in all physical space provided by the storage component, and the notification information indicates to isolate the part of physical space; and
isolating the part of physical space.

11. The method according to claim 10, wherein the notification information comprises an address of the part of physical space, and the isolating the part of physical space comprises:
updating an available address in the drive, wherein the available address is an address of allocatable physical space in the drive, and the available address after updation does not comprise the address of the part of physical space.

12. The method according to claim 10 or 11, wherein the notification information comprises a first address of physical space into which data is written and that is in the part of physical space, and the isolating the part of physical space comprises:
performing redundancy repair on the data in the first address.

13. A management method for a drive, wherein the drive comprises a storage controller and a storage component, the storage controller is configured to receive a data access request from a control unit of a storage node, and access, based on the data access request, physical space provided by the storage component, the method is applied to the control unit, and the method comprises:
obtaining running information of a local area in the storage component, wherein the local area is for providing a part of physical space in all physical space provided by the storage component, and the running information comprises values of one or more physical attributes of the local area;
identifying a health status of the local area based on the running information; and
when the health status of the local area indicates that the local area is faulty, determining that the part of physical space is unavailable.

14. The method according to claim 13, wherein the one or more physical attributes comprise at least one of the following physical attributes: a temperature, a size, a motion parameter, and an electrical parameter.

15. The method according to claim 14, wherein the drive is a hard disk drive HDD, the storage component comprises a plurality of heads, the local area is a part of the plurality of heads, the motion parameter comprises a head flying height, and the electrical parameter comprises a head resistance and/or a signal-to-noise ratio of a head signal.

16. The method according to any one of claims 13 to 15, wherein the method further comprises:
isolating the part of physical space.

17. The method according to claim 16, wherein the isolating the part of physical space comprises:
determining an address of the part of physical space; and
updating an available address in the drive, wherein the available address is an address of allocatable physical space in the drive, and the available address after updation does not comprise the address of the part of physical space.

18. The method according to claim 16 or 17, wherein the isolating the part of physical space comprises:
determining a first address of physical space into which data is written and that is in the part of physical space; and
performing redundancy repair on the data in the first address.

19. The method according to any one of claims 13 to 18, wherein the method further comprises:
determining a capacity of the part of physical space; and
isolating all the physical space in the drive when the capacity exceeds a threshold.

20. A management method for a drive, wherein the drive comprises a storage controller and a storage component, the storage controller is configured to receive a data access request from a control unit of a storage node, and access, based on the data access request, physical space provided by the storage component, the method is applied to the drive, and the method comprises:
obtaining running information of a local area in the storage component, wherein the local area is for providing a part of physical space in all physical space provided by the storage component, the running information comprises values of one or more physical attributes of the local area, and the running information identifies a health status of the local area; and
transmitting the running information to the control unit.

21. The method according to claim 20, wherein the one or more physical attributes comprise at least one of the following physical attributes: a temperature, a size, a motion parameter, and an electrical parameter.

22. The method according to claim 21, wherein the drive is a hard disk drive HDD, the storage component comprises a plurality of heads, the local area is a part of the plurality of heads, the motion parameter comprises a head flying height, and the electrical parameter comprises a head resistance and/or a signal-to-noise ratio of a head signal.

23. A drive, wherein the drive comprises a storage controller and a storage component, the storage controller is configured to connect to a control unit of a storage node, the storage component is configured to provide physical space for data storage for the control unit under control of the storage controller, and the storage controller is configured to perform the method according to any one of claims 1 to 9 or the method according to any one of claims 20 to 22.

24. A storage node, wherein the storage node comprises a control unit and a communication unit, the control unit is connected to the communication unit, the communication unit is configured to connect to a drive, and the control unit is configured to perform the method according to any one of claims 10 to 19.

25. The storage node according to claim 24, wherein the storage node further comprises one or more drives connected to the communication unit, and at least one of the one or more drives is the drive according to claim 23.

26. A storage system, comprising a plurality of storage nodes according to claim 24 or 25 that are connected to each other.

27. A computer-readable storage medium, wherein the computer-readable storage medium comprises computer-executable instructions; and when the computer-executable instructions are run on a computer, the computer is caused to perform the method according to any one of claims 1 to 22.

28. A management apparatus for a drive, wherein the drive comprises a storage controller and a storage component, the storage controller is configured to receive a data access request from a control unit of a storage node, and access, based on the data access request, physical space provided by the storage component, the management apparatus is used in the drive, and the management apparatus comprises:
an identification module, configured to identify a health status of a local area in the storage component, wherein the local area is for providing a part of physical space in all physical space provided by the storage component; and
a determining module, configured to: when the health status of the local area indicates that the local area is faulty, determine that the part of physical space is unavailable.

29. A management apparatus for a drive, wherein the drive comprises a storage controller and a storage component, the storage controller is configured to receive a data access request from a control unit of a storage node, and access, based on the data access request, physical space provided by the storage component, the management apparatus is used in the control unit, and the management apparatus comprises:
an obtaining module, configured to obtain notification information from the drive, wherein the notification information is transmitted by the drive to the control unit when a local area in the storage component is faulty, the local area is for providing a part of physical space in all physical space provided by the storage component, and the notification information indicates to isolate the part of physical space; and
an isolation module, configured to isolate the part of physical space.

30. A management apparatus for a drive, wherein the drive comprises a storage controller and a storage component, the storage controller is configured to receive a data access request from a control unit of a storage node, and access, based on the data access request, physical space provided by the storage component, the management apparatus is used in the control unit, and the management apparatus comprises:
an obtaining module, configured to obtain running information of a local area in the storage component, wherein the local area is for providing a part of physical space in all physical space provided by the storage component, and the running information comprises values of one or more physical attributes of the local area; and
a determining module, configured to identify a health status of the local area based on the running information, wherein
the determining module is further configured to: when the health status of the local area indicates that the local area is faulty, determine that the part of physical space is unavailable.

31. A management apparatus for a drive, wherein the drive comprises a storage controller and a storage component, the storage controller is configured to receive a data access request from a control unit of a storage node, and access, based on the data access request, physical space provided by the storage component, the management apparatus is used in the drive, and the management apparatus comprises:
an obtaining module, configured to obtain running information of a local area in the storage component, wherein the local area is for providing a part of physical space in all physical space provided by the storage component, the running information comprises values of one or more physical attributes of the local area, and the running information identifies a health status of the local area; and
a communication module, configured to transmit the running information to the control unit.
